# EUROPÄISCHE PATENTSCHRIFT

(11) **EP 3 666 810 B1**
(45) Veröffentlichungstag und Bekanntmachung des Hinweises auf die Patenterteilung: **08.02.2023**
(21) Anmeldenummer: 19213833.7
(22) Anmeldetag: 05.12.2019
(51) Int. Cl.: C08G 18/24, C08G 18/75, C08G 18/80, C08G 18/66, C08G 18/32, C08G 18/42, C08G 18/08, C08G 18/38

(54) **WASSERARME HYDROPHILIERUNGSMITTEL UND IHR EINSATZ IN WÄSSRIGEN DISPERSIONEN**
LOW WATER CONTENT HYDROPHILIC AGENT AND ITS USE IN AQUEOUS SOLUTIONS
AGENT D'HYDROPHILISATION PAUVRE EN EAU ET SON UTILISATION DANS DES DISPERSIONS AQUEUSES

(30) Priorität: 13.12.2018 EP 18212237
(43) Veröffentlichungstag der Anmeldung: 17.06.2020
(73) Patentinhaber: Evonik Operations GmbH, 45128 Essen (DE)
(72) Erfinder: SPYROU, Emmanouil, 46514 Schermbeck (DE); BRÜCKNER, Iris, 46284 Dorsten (DE); SCHODER, Judith, 45721 Haltern am See (DE)
(74) Vertreter: Evonik Patent Association

(56) Entgegenhaltungen:
- EP-A1- 2 045 278
- WO-A1-2018/095967
- JP-A- 2009 040 865
- US-A1- 2007 249 746
- US-A1- 2015 080 352

## Beschreibung

Wässrige Dispersionen haben in den letzten Jahrzehnten auf dem Sektor der Beschichtungen, Klebstoffe, Dichtstoffe und Kunststoffe immer mehr an Bedeutung gewonnen. Die Gründe hierfür sind vielfältig: Einfache Anwendbarkeit, gute Performance, geringe bis gar keine Toxizität und natürlich die Möglichkeit des Verzichts auf organische Lösemittel.

Um organische Bindemittel in wässrigen Systemen zu lösen oder zu dispergieren, bedarf es der Hilfe von Emulgatoren. Bevorzugt sind einbaubare Emulgatoren, sogenannte Hydrophilierungsmittel. Zu den bekanntesten zählt Dimethylolpropionsäure (DMPS). Diese wird nach dem Einbau mit Aminen oder Alkalisalzen neutralisiert. Nachteilig an der Verwendung von DMPS ist, dass für einen hydrophilierenden Effekt große Mengen benötigt werden, so dass dadurch die Bindemitteleigenschaften negativ beeinflusst werden.

Sulfonsäuren und Sulfonsäurederivate (z. B. Natrium-2-[(2-aminoethyl)amino]ethansulfonat, das unter der Handelsbezeichnung VESTAMIN A95 der Evonik Industries AG im Handel erhältlich ist) erzielen den gleichen Effekt. Von diesen Substanzen werden jedoch lediglich geringe Mengen benötigt. Nachteilig ist jedoch, dass Sulfonsäuren und Sulfonsäurederivate aufgrund ihrer großen Hydrophilie in der Regel in Wasser gelöst eingesetzt werden. Dies widerspricht jedoch ihrem Wirkungszweck, denn dazu muss das noch nicht hydrophilierte Bindemittel zunächst aufwändig in Wasser emulgiert werden. Es können zwar Hilfslösemittel wie z. B. veresterte Ether (z. B. CN 106366291 A) oder Aceton verwendet werden. Ihre Verwendung steht aber dem Einsatzziel wässriger Dispersionen entgegen und sie müssen aufwändig wieder entfernt werden.

JP 2009/040865 A offenbart wässrige Lösungen umfassend ein Sulfonsäurederivat und kleine Mengen Diethanolamin.

WO 2018/095967 A1 (gerichtet auf Verfahren zur Herstellung beschichteter Gegenstände, wobei mit einer PU-Dispersion beschichtet werden kann), EP 2 045 278 A1 (gerichtet auf PU-Dispersionen einsetzende Verfahren zur Herstellung geschäumter Artikel, insbesondere Wundauflagen), US 2015/0080352 A1 (gerichtet auf wässrige PU-Dispersionen und ihr Einsatz in der Behandlung von Akne) und US 2007/0249746 A1 (gerichtet auf Verfahren zur Herstellung mikroporöser Beschichtungen, die PU-Dispersionen einsetzen) offenbaren Polyurethandispersionen, die u.a. unter Verwendung von Mischungen enthaltend Sulfonsäuresalze und Diamine oder Hydroxyamine hergestellt werden können. Aminogruppen haben jedoch den Nachteil, Harnstoffgruppen auszubilden und darüber die Viskosität des Prepolymers nachteilig zu erhöhen.

Aufgabe der Erfindung war es somit, Hydrophilierungsmittel auf Basis von Sulfonsäuren bzw. Sulfonsäurederivaten bereitzustellen, die ohne nachteilige Zugabe von Wasser, organischen Lösemitteln oder aminogruppenhaltigen Verbindungen zum organischen Bindemittel eingesetzt werden können.

Gegenstand der vorliegenden Erfindung sind Zusammensetzungen mit einem Wassergehalt von weniger als 5 Gew.-%, bezogen auf die Gesamtmasse der Zusammensetzung, umfassend
a) 20 - 80 Gew.-% mindestens einer mit mindestens einer Hydroxy- und/oder Aminogruppe funktionalisierten Sulfonsäure und/oder mindestens eines mit mindestens einer Hydroxy- und/oder Aminogruppe funktionalisierten Sulfonsäurederivats und
b) 80 - 20 Gew.-% mindestens einer Verbindung mit mindestens zwei OH-Gruppen. Die Gewichtsprozentangaben beziehen sich hier und im Folgenden auf die Gesamtmasse an Bestandteilen der Zusammensetzung.

Die erfindungsgemäßen Zusammensetzungen eignen sich besonders zur wasser- und lösemittelfreien Hydrophilierung von Bindemitteln, insbesondere für isocyanathaltige Bindemittel. Ganz besonders bevorzugt eignet sich die erfindungsgemäße Zusammensetzung zur Hydrophilierung von Polyurethandispersionen.

Gegenstand der vorliegenden Erfindung sind somit bevorzugt entsprechende Hydrophilierungsmittel umfassend a) 20 - 80 Gew.-% mindestens einer mit mindestens einer Hydroxy- und/oder Aminogruppe funktionalisierten Sulfonsäure und/oder mindestens eines mit mindestens einer Hydroxy- und/oder Aminogruppe funktionalisierten Sulfonsäurederivats und b) 80 - 20 Gew.-% mindestens einer Verbindung mit mindestens zwei OH-Gruppen.

Die erfindungsgemäßen Zusammensetzungen bzw. Hydrophilierungsmittel können neben Sulfonsäure und/oder Sulfonsäurederivat und Verbindung mit mindestens zwei OH-Gruppen prinzipiell noch weitere reaktive Bestandteile und Lösemittel aufweisen. Bevorzugt bestehen die erfindungsgemäßen Zusammensetzungen bzw. Hydrophilierungsmittel jedoch aus diesen beiden reaktiven Bestandteilen. Weiterhin können prinzipiell Lösemittel (einschließlich Wasser) anwesend sein. Bevorzugt sind jedoch maximal 5 Gew.-% Lösemittel anwesend, da so besonders gute Effekte erzielt werden. Weiter bevorzugt handelt es sich bei dem Lösemittel, das zu maximal 5 Gew.-% anwesend ist, um Wasser. Noch weiter bevorzugt ist die Zusammensetzung wasserfrei. In einer anderen bevorzugten Ausgestaltung beträgt der Wassergehalt 0,5 - 5 Gew.-%, bevorzugt 1 - 4 Gew.-%, noch weiter bevorzugt 2 - 4 Gew.-%.

Bevorzugt enthält die Zusammensetzung a) 35 - 65 Gew.-% mindestens einer Sulfonsäure und/oder eines Sulfonsäurederivats und b) 65 - 35 Gew.-% mindestens einer Verbindung mit mindestens zwei OH-Gruppen. Noch weiter bevorzugt, da damit besonders gute Ergebnisse erzielt werden, enthält die Zusammensetzung a) 40 - 60 Gew.-% mindestens einer Sulfonsäure und/oder eines Sulfonsäurederivats und b) 60 - 40 Gew.-% mindestens einer Verbindung mit mindestens zwei OH-Gruppen.

Bevorzugt enthält die erfindungsgemäße Zusammensetzung ein Sulfonsäurederivat, weiter bevorzugt ein Sulfonsäuresalz. Noch weiter bevorzugt ist das Sulfonsäuresalz ein Lithium-, Natrium-, Kalium- oder Cäsiumsalz einer Sulfonsäure ausgewählt aus der Gruppe bestehend aus Hydroxyethylsulfonsäure, Hydroxypropylsulfonsäure, Hydroxybutylsulfonsäure, Aminoethylsulfonsäure, Aminopropylsulfonsäure, Aminobutylsulfonsäure und 2-[(2-Aminoethyl)aminoethan]sulfonsäure. Ganz besonders bevorzugt ist das Natriumsalz der 2-[(2-Aminoethyl)aminoethan]sulfonsäure (Hauptbestandteil des Verkaufsproduktes VESTAMIN A95 der Evonik Industries AG).

Ganz besonders bevorzugt enthält die erfindungsgemäße Zusammensetzung ausschließlich ein Sulfonsäurederivat, weiter bevorzugt ausschließlich ein Sulfonsäuresalz, d. h. die Zusammensetzung enthält 20 - 80 Gew.-% mindestens eines Sulfonsäurederivats oder eines Sulfonsäuresalzes und keine Sulfonsäure.

Bei der Verbindung mit mindestens zwei OH-Gruppen handelt es sich um Polyole (Verbindungen mit mindestens zwei OH-Gruppen).

Einsetzbare Polyole sind prinzipiell alle monomeren oder polymeren Stoffe, die über mindestens zwei Hydroxygruppen verfügen. Bevorzugt sind Ethylenglycol, Propylenglycol, Butandiol, Propandiol, Hexandiol, Trimethylolpropan, Glycerin, Polyetherpolyole (insbesondere Polyethylenglycol und Polypropylenglycol) und Polycaprolactonpolyole. Bevorzugte Polyetherpolyole und Polycaprolactonpolyole sind die folgenden von kommerziellen Anbietern verfügbaren Polycaprolactonpolyole ("Capa"-Typen) und Polyetherpolyole (alle anderen) sowie:

| | OHZ (ca.) | Molmasse | Hersteller |
|---|---|---|---|
| Polyol 3165 | 1010 | 165 | Perstorp |
| Polyol 3380 | 380 | 440 | Perstorp |
| Polyol 3610 | 610 | 280 | Perstorp |
| Polyol 3940 | 940 | 180 | Perstorp |
| Polyol 3990 | 990 | 170 | Perstorp |
| Polyol 4290 | 290 | 800 | Perstorp |
| Polyol 4360 | 360 | 630 | Perstorp |
| Polyol 4525 | 525 | 430 | Perstorp |
| Polyol 4640 | 640 | 360 | Perstorp |
| Polyol 4800 | 800 | 280 | Perstorp |
| Polyol R3215 | 215 | 1010 | Perstorp |
| Polyol R3430 | 430 | 400 | Perstorp |
| Polyol R3530 | 530 | 310 | Perstorp |
| Polyol R3540 | 540 | 310 | Perstorp |
| Polyol R3610 | 610 | 280 | Perstorp |
| Polyol R4631 | 630 | 280 | Perstorp |
| Polyol R6405 | 405 | 830 | Perstorp |
| Voranol CP 260 | 660 | 255 | Dow |
| Voranol CP 300 | 565 | 300 | Dow |
| Voranol CP 450 | 380 | 450 | Dow |
| Voranol CP 755 | 240 | 700 | Dow |
| Voranol CP 1055 | 155 | 1000 | Dow |
| Voranol RH 360 | 360 | 700 | Dow |
| Voranol RN 490 | 490 | 490 | Dow |
| Voranol RA 640 | 640 | 350 | Dow |
| Voranol RA 800 | 800 | 280 | Dow |
| Terathane 650 | 170 | 650 | DuPont |
| Terathane 1000 | 100 | 1000 | Du Pont |
| Capa 3031 | 560 | 300 | Perstorp |
| Capa 3041 | 395 | 425 | Perstorp |
| Capa 3050 | 310 | 540 | Perstorp |
| Capa 3091 | 180 | 900 | Perstorp |
| Capa 4101 | 220 | 1000 | Perstorp |

Die bevorzugte gewichtsmittlere Molmasse der Polyole liegt zwischen 62 und 1000 g/Mol und/oder die bevorzugte Funktionalität zwischen 2 und 6.

Der Wassergehalt der erfindungsgemäßen Zusammensetzungen, des erfindungsgemäßen Hydrophilierungsmittels bzw. der Polyurethandispersion beträgt weniger als 5 Gew.-% bezogen auf die Gesamtmasse der Zusammensetzung, weiter bevorzugt weniger als 1 Gew.-%, noch weiter bevorzugt weniger als 0,5 Gew.-%.

Die Zusammensetzung / das Hydrophilierungsmittel aus wasserarmen Sulfonsäurederivat und Polyol kann einfach hergestellt werden. Gegenstand der Erfindung ist somit ebenfalls ein Verfahren zur Herstellung der erfindungsgemäßen Zusammensetzungen bzw. Hydrophilierungsmittel, bei dem Sulfonsäure bzw. Sulfonsäurederivat mit der Verbindung mit mindestens zwei OH-Gruppen vermischt wird. Eine Möglichkeit der Herstellung der Zusammensetzung / des Hydrophilierungsmittels ist die Lösung des Sulfonsäurederivats in dem Polyol bei Raumtemperatur oder, wenn nötig, bei höheren Temperaturen in geeigneten Rührapparaturen.

Für den Fall, dass die Sulfonsäure bzw. das Sulfonsäurederivat in Wasser vorliegt, ist sie/es vor Verwendung zu trocknen. Liegt das Sulfonsäurederivat in Wasser vor, so kann zunächst das Wasser vorzugsweise unter vermindertem Druck in einer geeigneten Destillationsapparatur, z. B. in einer Destillationskolonne, oder in einem Kurzweg- oder Dünnschichtverdampfer bei Temperaturen zwischen RT und 100 °C abgetrennt werden. Auch eine einfache Trocknung im Ofen kommt in Frage. Ist das Sulfonsäurederivat dann wasserfrei, oder weitgehend wasserfrei, kann wie oben beschrieben weitergegangen werden, um die Mischung mit den Polyolen oder Polyaminen herbeizuführen.

Alternativ kann in das wasserhaltige Sulfonsäurederivat auch zunächst das Polyol zugegeben werden, um danach wie oben beschrieben das Wasser destillativ zu entfernen. Dies hat den Vorteil, dass die Zusammensetzung in allen Stadien flüssig bleibt und damit besser zu verarbeiten ist.

Zur Herstellung der ebenfalls erfindungsgemäßen Zusammensetzungen/Bindemitteldispersionen werden die einzelnen Komponenten in Analogie zur Lehre der DE 14 95 745 A1 bzw. zu der DE 14 95 847 A1, Isocyanate und Polyole ggf. in einem geeigneten wasserfreien Lösemittel mit der erfindungsgemäßen Hydrophilierungsmischung zur Reaktion gebracht. Optional kann dies unter erhöhter Temperatur oder/und in Gegenwart von bekannten Polyurethankatalysatoren geschehen. Nach vollständiger Reaktion wird das eventuell vorhandene Lösemittel abgetrennt, dieses NCOhaltige PUR-Prepolymer mit Wasser in Kontakt gebracht und durch kräftiges Rühren dispergiert. Üblicherweise wird vor, während oder nach der Wasserzugabe noch eine Kettenverlängerer zugegeben, wobei es sich meist um kurzkettige Diamine oder Aminoalkohole handelt.

Gegenstand der Erfindung ist auch die Verwendung der erfindungsgemäßen Zusammensetzung zur Hydrophilierung von Bindemitteln für wässrige Dispersionen, insbesondere für isocyanathaltige Bindemittel.

### Experimenteller Teil:

### 1) Herstellung der erfindungsgemäßen Mischungen

Je 100 g Vestamin A95 (Evonik Industries AG) wurden jeweils mit 50 g der folgenden Polyole, Polyamine bzw. Aminoalkohole versetzt: a) Butandiol, b) Ethylendiamin (nicht erfindungsgemäßes Beispiel), c) Diethanolamin.

Danach wurden die Mischungen mit einem Kurzwegverdampfer bei 70 °C und 0,2 mbar von Wasser weitgehend befreit. Es entstanden klare Lösungen ohne Bodensatz. Der Wassergehalt betrug < 1 Gew.-%.

### 2) Herstellung einer Polyurethandispersion

111 g IPDI wurden mit 0,1 g Dibutylzinndilaurat (Aldrich) versetzt, auf 100 °C aufgeheizt und tropfenweise mit 16,4 g des Produktes 1a versetzt. Nach 30 min Nachrührzeit bei 100 °C wurde die Temperatur auf 60 °C abgekühlt und vorsichtig mit 100 ml Aceton verdünnt. Bei 60 °C wurde dann 88,5 g Oxyester T1136 (Polyester, Evonik Industries AG, OHZ: 112 mg KOH/g), 12,3 g Butandiol (Aldrich) und 4,3 g Trimethylolpropan (Aldrich) zugesetzt. Nach 12 h Heizen unter Rückfluss war die NCO-Zahl auf 3,2% (auf Feststoff) gesunken. Danach wurde abgekühlt, mit 120 ml Aceton verdünnt und mit 6 g Ethylendiamin (Aldrich), gelöst in 25 ml Aceton versetzt. Nach 15 s Rühren wurden schließlich 430 ml Wasser in 30 s hinzugegeben und danach noch zwei Minuten bei 4400 U/min nachdispergiert. Das Aceton wurde im Rotationsverdampfer bei <60 °C abgezogen und das resultierende weiße Produkt durch einen 50 µm Filter gegeben. Die Polyurethandispersion hatte einen pH-Wert von 8,8 und einen Feststoffgehalt von 35%, war niedrigviskos und stabil.

## Patentansprüche

1. Zusammensetzung mit einem Wassergehalt von weniger als 5 Gew.-%, bezogen auf die Gesamtmasse der Zusammensetzung, umfassend
a) 20 - 80 Gew.-%, bezogen auf die Gesamtmasse an Bestandteilen der Zusammensetzung, mindestens einer mit mindestens einer Hydroxy- und/oder Aminogruppe funktionalisierten Sulfonsäure und/oder mindestens eines mit mindestens einer Hydroxy- und/oder Aminogruppe funktionalisierten Sulfonsäurederivats und
b) 80 - 20 Gew.-%, bezogen auf die Gesamtmasse an Bestandteilen der Zusammensetzung, mindestens einer Verbindung mit mindestens zwei OH-Gruppen.

2. Zusammensetzung nach Anspruch 1,
**dadurch gekennzeichnet, dass**
die Komponenten a) und b) als einzige reaktive Bestandteile der Zusammensetzung enthalten sind.

3. Zusammensetzung nach Anspruch 1 oder 2,
**dadurch gekennzeichnet, dass**
sie maximal 5 Gew.-%, bezogen auf die Gesamtmasse an Bestandteilen der Zusammensetzung, Lösemittel enthält.

4. Zusammensetzung nach einem der Ansprüche 1 - 3,
**dadurch gekennzeichnet, dass** sie
a) 35 - 65 Gew.-% mindestens einer Sulfonsäure und/oder eines Sulfonsäurederivats und
b) 65 - 35 Gew.-% mindestens einer Verbindung mit mindestens zwei OH-Gruppen aufweist.

5. Zusammensetzung nach einem der vorhergehenden Ansprüche,
**dadurch gekennzeichnet, dass**
die Komponente a) ausschließlich ein Sulfonsäurederivat ist.

6. Zusammensetzung nach einem der vorhergehenden Ansprüche,
**dadurch gekennzeichnet, dass**
das Sulfonsäurederivat ein Lithium-, Natrium-, Kalium- oder Cäsiumsalz einer Sulfonsäure ausgewählt aus der Gruppe bestehend aus Hydroxyethylsulfonsäure, Hydroxypropylsulfonsäure, Hydroxybutylsulfonsäure, Aminoethylsulfonsäure, Aminopropylsulfonsäure, Aminobutylsulfonsäure und 2-[(2-Aminoethyl)aminoethan]sulfonsäure ist.

7. Zusammensetzung nach einem der vorhergehenden Ansprüche,
**dadurch gekennzeichnet, dass**
die Verbindung mit mindestens zwei funktionellen Gruppen ein Polyol ausgewählt aus der Gruppe bestehend aus Ethylenglycol, Propylenglycol, Butandiol, Propandiol, Hexandiol, Trimethylolpropan, Glycerin, Polyetherpolyolen und Polycaprolactonpolyolen ist.

8. Zusammensetzung nach einem der vorhergehenden Ansprüche,
**dadurch gekennzeichnet, dass**
die bevorzugte gewichtsmittlere Molmasse der Komponente b) zwischen 62 und 1000 g/Mol beträgt.

9. Verfahren zur Herstellung einer Zusammensetzung nach einem der vorhergehenden Ansprüche, **dadurch gekennzeichnet, dass** die mindestens eine Sulfonsäure bzw. das mindestens eine Sulfonsäurederivat mit der Verbindung mit mindestens zwei OH-Gruppen vermischt wird.

10. Verwendung einer Zusammensetzung nach einem der Ansprüche 1 - 8 zur Hydrophilierung von Bindemitteln für wässrige Dispersionen.

## Claims

1. Composition having a water content of less than 5% by weight based on the total mass of the composition, comprising
a) 20-80% by weight, based on the total mass of constituents of the composition, of at least one sulfonic acid functionalized with at least one hydroxy and/or amino group and/or at least one sulfonic acid derivative functionalized with at least one hydroxy and/or amino group and
b) 80-20% by weight, based on the total mass of constituents of the composition, of at least one compound having at least two OH groups.

2. Composition according to Claim 1,
**characterized in that**
components a) and b) are present as the sole reactive constituents of the composition.

3. Composition according to Claim 1 or 2,
**characterized in that**
it contains not more than 5% by weight, based on the total mass of constituents of the composition, of solvents.

4. Composition according to any of Claims 1 to 3, **characterized in that** it includes
a) 35-65% by weight of at least one sulfonic acid and/or at least one sulfonic acid derivative and
b) 65-35% by weight of at least one compound having at least two OH groups.

5. Composition according to any of the preceding claims,
**characterized in that**
component a) is exclusively a sulfonic acid derivative.

6. Composition according to any of the preceding claims,
**characterized in that**
the sulfonic acid derivative is a lithium, sodium, potassium or caesium salt of a sulfonic acid selected from the group consisting of hydroxyethylsulfonic acid, hydroxypropylsulfonic acid, hydroxybutylsulfonic acid, aminoethylsulfonic acid, aminopropylsulfonic acid, aminobutylsulfonic acid and 2-[(2-aminoethyl)aminoethane]sulfonic acid.

7. Composition according to any of the preceding claims,
**characterized in that**
the compound having at least two functional groups is a polyol selected from the group consisting of ethylene glycol, propylene glycol, butanediol, propanediol, hexanediol, trimethylolpropane, glycerol, polyether polyols and polycaprolactone polyols.

8. Composition according to any of the preceding claims,
**characterized in that**
the preferred weight-average molar mass of component b) is between 62 and 1000 g/mol.

9. Process for producing a composition according to any of the preceding claims, **characterized in that** the at least one sulfonic acid and/or the at least one sulfonic acid derivative is mixed with the compound having at least two OH groups.

10. Use of a composition according to any of Claims 1 to 8, for the hydrophilization of binders for aqueous dispersions.

## Revendications

1. Composition ayant une teneur en eau inférieure à 5 % en poids, par rapport à la masse totale de la composition, comprenant
a) 20 à 80 % en poids, par rapport à la masse totale des constituants de la composition, d'au moins un acide sulfonique fonctionnalisé par au moins un groupe hydroxy et/ou amino et/ou d'au moins un dérivé d'acide sulfonique fonctionnalisé par au moins un groupe hydroxy et/ou amino, et
b) 80 à 20 % en poids, par rapport à la masse totale des constituants de la composition, d'au moins un composé ayant au moins deux groupes OH.

2. Composition selon la revendication 1, **caractérisée en ce que** les composants a) et b) sont présents en tant que constituants réactifs uniques de la composition.

3. Composition selon la revendication 1 ou 2, **caractérisée en ce qu'**elle contient au maximum 5 % en poids de solvants par rapport à la masse totale des constituants de la composition.

4. Composition selon l'une des revendications 1 à 3, **caractérisée en ce qu'**elle comprend
a) 35 à 65 % en poids d'au moins un acide sulfonique et/ou d'un dérivé d'acide sulfonique et
b) 65 à 35 % en poids d'au moins un composé ayant au moins deux groupes OH.

5. Composition selon l'une des revendications précédentes, **caractérisée en ce que** le composant a) est exclusivement un dérivé d'acide sulfonique.

6. Composition selon l'une des revendications précédentes, **caractérisée en ce que** le dérivé d'acide sulfonique est un sel de lithium, de sodium, de potassium ou de césium d'un acide sulfonique choisi dans le groupe consistant en l'acide hydroxyéthylsulfonique, l'acide hydroxypropylsulfonique, l'acide hydroxybutylsulfonique, l'acide aminoéthylsulfonique, l'acide aminopropylsulfonique, l'acide aminobutylsulfonique et l'acide 2-[(2-aminoéthyl)aminoéthane]sulfonique.

7. Composition selon l'une des revendications précédentes, **caractérisée en ce que** le composé ayant au moins deux groupes fonctionnels est un polyol choisi dans le groupe consistant en l'éthylèneglycol, le propylèneglycol, le butanediol, le propanediol, l'hexanediol, le triméthylolpropane, le glycérol, les polyétherpolyols et les polycaprolactonepolyols.

8. Composition selon l'une des revendications précédentes, **caractérisée en ce que** la masse moléculaire moyenne en poids préférée du composant b) est comprise entre 62 et 1 000 g/mol.

9. Procédé de préparation d'une composition selon l'une des revendications précédentes, **caractérisé en ce qu'**on mélange l'au moins un acide sulfonique ou l'au moins un dérivé d'acide sulfonique au composé ayant au moins deux groupes OH.

10. Utilisation d'une composition selon l'une des revendications 1 à 8 pour l'hydrophilisation de liants pour dispersions aqueuses.
